# EUROPEAN PATENT SPECIFICATION

(11) **EP 4 084 295 B1**
(45) Date of publication and mention of the grant of the patent: **14.08.2024**
(21) Application number: 20906541.6
(22) Date of filing: 27.10.2020
(51) Int. Cl.: H02K 1/276, H02K 1/32

(54) **ROTARY ELECTRIC MACHINE**
ELEKTRISCHE DREHMASCHINE
MACHINE ÉLECTRIQUE ROTATIVE

(30) Priority: 27.12.2019 JP 2019237594
(43) Date of publication of application: 02.11.2022
(73) Proprietor: Hitachi Industrial Products, Ltd., Tokyo 101-0021 (JP)
(72) Inventor: TAMAKI, Manabu, Tokyo 101-0021 (JP); TAMIYA, Shuichi, Tokyo 101-0021 (JP); SATO, Misato, Tokyo 101-0021 (JP); TAKISAWA, Hayato, Tokyo 101-0021 (JP)
(74) Representative: MERH-IP Matias Erny Reichl Hoffmann Patentanwälte PartG mbB
(86) International application number: PCT/JP2020/040200
(87) International publication number: WO 2021/131298

(56) References cited:
- EP-A1- 3 540 919
- WO-A1-2014/129086
- JP-A- 2004 222 348
- JP-A- 2005 304 177
- JP-A- 2007 259 583
- JP-A- 2007 259 583
- JP-A- 2010 004 630
- JP-A- 2012 125 034
- JP-A- 2012 147 616
- JP-A- 2013 183 545
- JP-A- 2015 104 224
- JP-A- 2017 158 408
- JP-A- 2018 088 748
- US-A1- 2012 181 894
- US-A1- 2018 198 331

## Description

### Technical Field

The present invention relates to a rotary electric machine having permanent magnets.

### Background Art

As a rotary electric machine having permanent magnets, there is typically an embedded magnet type synchronous rotary electric machine. In this embedded magnet type synchronous rotary electric machine, permanent magnets are inserted inside a rotor core that is made up of laminated electromagnetic steel sheets. Then, rotor end plates are installed onto both ends of the rotor core, and the rotor end plates fix the laminated electromagnetic steel sheets and prevent the permanent magnets from protruding out of the rotor core.

From a viewpoint of preventing iron loss because of leakage flux from the permanent magnets and a viewpoint of strength, stainless steel materials that are non-magnetic materials are used for the rotor end plates. However, stainless steel materials are expensive in comparison with iron materials (steel), which was a factor of increasing cost of a rotary electric machine.

As background art in the relevant technical field noted above, there is Japanese Patent Application Laid-Open No. 2018-88748 (Patent Literature (PTL) 1) as well as US Patent Application US 2012/181894 A1. In PTL 1, described is an embedded magnet type synchronous rotary electric machine in which permanent magnets are inserted in magnet insertion holes in a rotor core, rotor end plates are installed onto the end faces of the rotor core, and the rotor core and the rotor end plates are fixed onto a shaft by shrink fitting. The rotor end plates are formed of an inner circumferential ring body formed of a strength member and an outer circumferential ring body formed of a non-magnetic material being installed concentrically with respect to the inner circumferential ring body. The inner circumferential ring body transmits torque and the outer circumferential ring body closes up the end faces of the magnet insertion holes.

### Citation List

### Patent Literature

PTL 1: Japanese Patent Application Laid-Open No. 2018-88748
PTL 2: US Patent Application US 2012/181894 A1. 5

### Summary of Invention

### Technical Problem

In PTL 1, a description is given of the embedded magnet type synchronous rotary electric machine including the rotor end plates formed of the inner circumferential ring body and the outer circumferential ring body formed of a non-magnetic material being installed concentrically with respect to the inner circumferential ring body.

In PTL 1, there is, however, no description about a rotary electric machine making improvement in functionality and workability and making reduction in manufacturing cost with reduced use of expensive non-magnetic materials.

Therefore, the present invention provides a rotary electric machine making improvement in functionality and workability and making reduction in manufacturing cost with reduced use of expensive non-magnetic materials.

### Solution to Problem

To solve the above-noted problem, a rotary electric machine of the present invention has a stator and a rotor, the rotor including a rotor core which is made up of electromagnetic steel sheets laminated in an axial direction; permanent magnets which are axially inserted in the rotor core; a shaft going through a radial center of the rotor core and serving as an axis of rotation; a first rotor end plate formed of a non-magnetic material and a second rotor end plate formed of an iron material (steel) being installed in an axial direction onto one end of the rotor core; and a third rotor end plate formed of an iron material (steel) and a fourth rotor end plate formed of a non-magnetic material being installed in a radial direction onto the other end of the rotor core. The rotary electric machine is characterized in that the first rotor end plate is installed axially inward than the second rotor end plate with the first rotor end place covering the magnet insertion holes and in contact with the permanent magnets, and the fourth rotor end plate is installed radially outward than the third rotor end plate with the fourth rotor end plate covering the magnet insertion holes and in contact with the permanent magnets; and the fixture part, the second rotor end plate, the first rotor end plate, and the rotor core are fixed onto the shaft in order mentioned above and the fourth rotor end plate is fixed onto the third rotor end plate.

### Advantageous Effects of Invention

According to the present invention, it is possible to provide a rotary electric machine making improvement in functionality and workability and making reduction in manufacturing cost with reduced use of expensive non-magnetic materials.

Problems, configurations, and advantageous effects other than noted above will become apparent from the following description of an example.

### Brief Description of Drawings

Figure 1 is an axial sectional view of a rotor 1 to schematically explain a general structure of the rotor for use in a rotary electric machine which is described in the present example.
Figure 2 is a radial sectional view of the rotor 1 to schematically explain a general structure of the rotor for use in the rotary electric machine as described in the present example.

### Description of Embodiments

In the following, an example of embodiment of the present invention is described with the drawings. Note that substantially identical or similar components are assigned identical reference numerals; their descriptions that are duplicative may be omitted.

### Example 1

To begin with, this section schematically explains a general structure of a rotor 1 for use in a rotary electric machine which is described in the present example, when viewed axially.

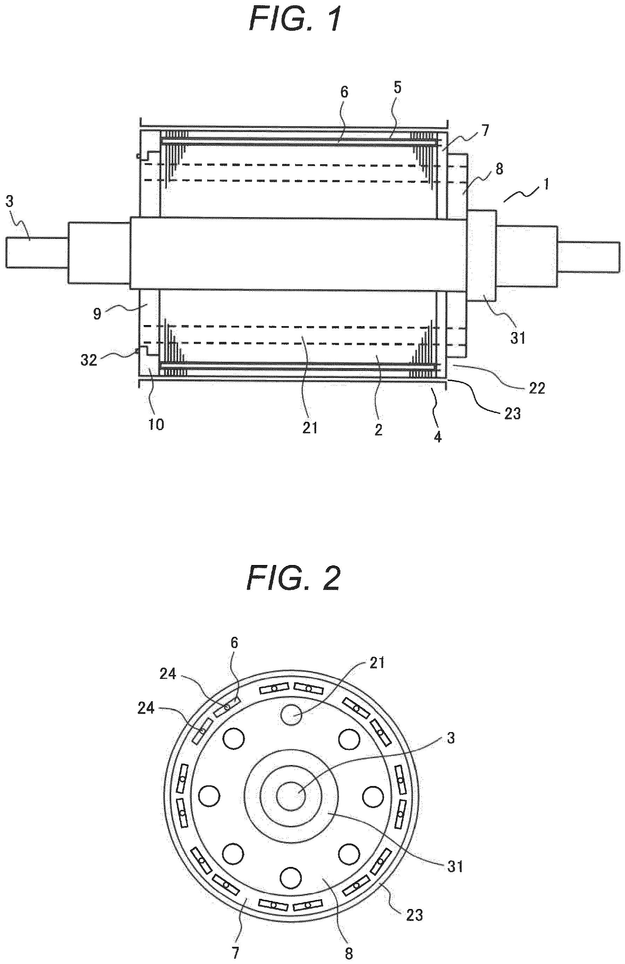

Figure 1 is an axial sectional view of the rotor 1 to schematically explain a general structure of the rotor for use in the rotary electric machine which is described in the present example.

The rotary electric machine as described in the present example has the rotor 1 and a stator 4 which is installed around the outside periphery of the rotor 1. If the rotary electric machine is a generator, current can be taken out from the stator 4 by rotating the rotor 1 with external motive power. In addition, if the rotary electric machine is an electric motor, motive power can be supplied to outside by allowing current to flow through the stator 4 and rotating the rotor 1.

In addition, the rotor 1 includes a rotor core 2, a shaft 3, a rotor end plate (a first rotor end plate) 7, a rotor end plate (a second rotor end plate) 8, a rotor end plate (a third rotor end plate) 9, a rotor end plate (a fourth rotor end plate) 10, and permanent magnets 6.

The rotor core 2 is made up of electromagnetic steel sheets laminated in an axial direction. In addition, in the rotor core 2 (the electromagnetic steel plates constituting the rotor core 2), magnet insertion holes 5 are formed in an axial direction and the permanent magnets 6 are inserted (embedded) in the magnet insertion holes 5. After being inserted in the magnet insertion holes 5, the permanent magnets 6 are fixed to the rotor core 2 with resin such as varnish or an adhesive or the like.

The shaft 3 goes through the rotor core in an axially center portion and serves as the axis of rotation of the rotor 1. A fixture part 31 to fix the rotor end plates is installed onto the shaft 3. Note that the shaft 3 is integrally formed by machining or the like.

The rotor end plate 7 formed of a non-magnetic material and the rotor end plate 8 formed of an iron material (steel) are installed onto one end of the rotor core 2. The rotor end plate 9 formed of an iron material (steel) and the rotor end plate 10 formed of a non-magnetic material are installed onto the other end of the rotor core 2.

Namely, these rotor end plates are installed onto both the ends of the rotor core 2, and the rotor end plates fix the laminated electromagnetic steel sheets and prevent the permanent magnets 6 from protruding out of the rotor core 2.

Here, an explanation is made of a method in which the rotor 1 is manufactured.

First, the rotor end plate 8, the rotor end plate 7, the electromagnetic steel sheets constituting the rotor core 2, and the rotor end plate 9 are installed in order onto the shaft 3 by shrink fitting from the left side in the drawing. The rotor end plate 8 is brought in contact with and fixed by the fixture part 31 on the shaft 3. Namely, the diameter of the fixture part 31 of the shaft 3 is larger than the diameter of a through hole that is formed in the center of each of the rotor end plate 8, the rotor end plate 7, the electromagnetic steel sheets constituting the rotor core 2, and the rotor end plate 9.

Note that the rotor end plate 8, the rotor end plate 7, and the rotor end plate 9 are crimped from both the ends of the rotor core in a direction in which the rotor end plate 8, the rotor end plate 7, and the rotor end plate 9 get closer to each other before being fixed onto the shaft 3 by shrink fitting.

After the rotor end plate 8, the rotor end plate 7, the electromagnetic steel sheets constituting the rotor core 2, and the rotor end plate 9 are fixed onto the shaft 3, then permanent magnets 6 are inserted in the magnet insertion holes 5. After being inserted in the magnet insertion holes 5, the permanent magnets 6 are fixed to the rotor core 2 with resin such as varnish or an adhesive or the like.

After the permanent magnets 6 are fixed to the rotor core 2, finally, the rotor end plate 10 is fixed onto the outside periphery of the rotor end plate 9 with a tightening part 32 such as a bolt or the like.

Namely, the rotor end plate 7 formed of a non-magnetic material and the rotor end plate 8 formed of an iron material (steel) are installed in an axial direction onto one end of the rotor core 2. The rotor end plate 9 formed of an iron material (steel) and the rotor end plate 10 formed of a non-magnetic material are installed in a radial direction onto the other end of the rotor core 2.

In the rotary electric machine as described in the present example, it is possible to install the rotor end plate 8 and the rotor end plate 7 in a series of work processes (a series of shrink fitting processes) in the manner described above; this can improve workability and reduce manufacturing cost.

The rotor end plate 7 is installed in contact with the rotor core 2 and made of a non-magnetic material such as, e.g., a stainless steel material. Also, the rotor end plate 7 is installed, radially extending outward than locations where the magnet insertion holes 5 are placed up to the outside periphery of the rotor and installed to cover the magnet insertion holes 5. Due to the fact that the rotor end plate 7 is made of a non-magnetic material and installed to cover the magnet insertion holes 5, it is possible to suppress generation of iron loss because of leakage flux produced by the permanent magnets 6.

The rotor end plate 8 is installed in contact with the rotor end plate 7 and the fixture part 31 on the shaft 3 and made of, e.g., an iron material (steel). Note that the rotor end plate 8 may be made of a magnetic material. Iron materials (steel) are generally less costly in comparison with stainless steel materials. Reducing the amount of use of stainless steel materials can make a reduction in the cost of the rotary electric machine.

As appreciated above, the rotor end plate 7 is installed axially inward than the rotor end plate 8 and the rotor end plate 7 is in contact with the permanent magnets 6.

In addition, the rotor end plate 8 is installed, radially extending inward than the locations where the magnet insertion holes 5 are placed and installed not to cover the magnet insertion hole 5. Namely, the diameter of the rotor end plate 8 is smaller than the diameter of the rotor end plate 7. Note that the diameter of the rotor end plate 8 is larger than the diameter of the fixture part 31 on the shaft 3. This can enhance strength of the rotor end plate 7 and the rotor end plate 8.

Furthermore, the rotary electric machine as described in the present example is supplied with cooling air to cool the rotor 1 and the stator 4 from the right side in the drawing. Namely, in the rotary electric machine as described in the present example, a fan (not depicted) is installed to generate cooling air to cool the rotor 1 and the stator 4 on the side of the fixture part 31 on the shaft 3 (the side where the rotor end plate 7 and the rotor end plate 8 are installed). Then, this cooling air is supplied from the fixture part 31 on the shaft 3 (the side where the rotor end plate 7 and the rotor end plate 8 are installed) and let to enter a gap 23 between the rotor 1 and the stator 4.

Meanwhile, due to the fact that the diameter of the rotor end plate 8 is made smaller than the diameter of the rotor end plate 7, a step 22 is formed in a radial direction between the rotor end plate 8 and the rotor end plate 7. Then, the step 22 allows the cooling air to enter the gap 23 between the rotor 1 and the stator 4 with less resistance and more easily and can improve cooling efficiency.

As appreciated above, in the rotary electric machine as described in the present example, the shapes of the rotor end plates (the rotor end plate 8 and the rotor end plate 7) on the side from where the cooling air is applied differ from the shapes of the rotor end plates (the rotor end plate 9 and the rotor end plate 19) on the opposite side. Namely, each rotor end plate is configured to have its function.

In addition, the axial thickness of the rotor end plate 8 is thicker than the axial thickness of the rotor end plate 7. The axial thickness of the rotor end plate 8 is five to six times the axial thickness of the rotor end plate 7. For example, if the axial thickness of the rotor end plate 7 is 2 to 4 mm, the axial thickness of the rotor end plate 8 will be 10 to 24 mm. This can enhance strength of the rotor end plate 7 and the rotor end plate 8, while reducing the amount of use of stainless steel materials.

The rotor end plate 9 is installed in contact with the rotor core 2 on the opposite side to the rotor end plate 7 and made of, e.g., an iron material (steel). Note that the rotor end plate 8 may be made of a magnetic material. In addition, the diameter of the rotor end plate 9 is equivalent to the diameter of the rotor end plate 8 and the axial thickness of the rotor end plate 9 is equivalent to the axial thickness of the rotor end plate 8.

The rotor end plate 10 is installed in contact with the rotor core 2 on the outside periphery of the rotor end plate 9 and made of a non-magnetic material such as, e.g., a stainless steel material. Also, the rotor end plate 10 is installed to cover the magnet insertion holes 5. Due to the fact that the rotor end plate 10 is made of a non-magnetic material and installed to cover the magnet insertion holes 5, it is possible to suppress generation of iron loss because of leakage flux produced by the permanent magnets 6. Then, the rotor end plate 10 is fixed to the rotor end plate 9 with the tightening part 32 such as a bolt or the like.

As appreciated above, the rotor end plate 10 is installed radially outward than the rotor end plate 9 and the rotor end plate 10 is in contact with the permanent magnets 6.

In addition, the axial thickness of the rotor end plate 10 is equivalent to the axial thickness of the rotor end plate 9. This can enhance strength of the rotor end plate 9 and the rotor end plate 10 while reducing the amount of use of stainless steel materials.

As appreciated above, in the rotary electric machine as described in the present example, the rotor end plate 7 and the rotor end plate 8 are installed in an axial direction onto the one end of the rotor core 2, and the rotor end plate 9 and the rotor end plate 10 are installed in a radial direction onto the other end of the rotor 2; it is thus possible to improve functionality and workability and reduce manufacturing cost with reduced use of expensive non-magnetic materials.

Additionally, in the rotor 1, there are formed cooling holes 21 going through the rotor end plate 8, the rotor end plate 7, the electromagnetic steel sheets constituting the rotor core 2, and the rotor end plate 9. The cooling holes 21 are placed radially inward than the locations where the magnet insertion holes 5 are placed. By the cooling holes, it is possible to cool the electromagnetic steel sheets constituting the rotor core 2 and the permanent magnets 6 inserted in the magnet insertion holes 5.

Then, the following schematically explains a general structure of the rotor 1 for use in the rotary electric machine as described in the present example, when viewed radially.

Figure 2 is a radial sectional view of the rotor 1 to schematically explain a general structure of the rotor 1 for use in the rotary electric machine as described in the present example.

The rotary electric machine as described in the present example has the rotor 1 and the stator 4 which is installed around the outside periphery of the rotor 1 and the gap 23 is formed between the rotor 1 and the stator 4.

Then, the permanent magnets 6 are inserted in the magnet insertion holes 5. The permanent magnets 6 are installed in the rotor core 2 at certain intervals in a circumferential direction. Also, pairs of the permanent magnets 6 are installed in proximity to each other. This enables it to use magnetic force of the permanent magnets more efficiently. Note that every two permanent magnets 6 arranged adjacently in the circumferential direction are magnetized to opposite magnetic polarities (N pole and S pole) .

In addition, in the rotor end plate 7, in positions corresponding to locations where the permanent magnets 6 are placed (in portions where the rotor end plate 7 contacts the permanent magnets 6), holes 24 are formed for prevention against erroneous insertion of the permanent magnets 6. Due to the fact that the diameter of the rotor end plate 8 is made smaller than the diameter of the rotor end plate 7, it is needed to form the holes 24 only in the rotor end plate 7 and workability can be improved.

Furthermore, in the rotor 1, there are formed the cooling holes 21 going through the rotor end plate 8, the rotor end plate 7, the electromagnetic steel sheets constituting the rotor core 2, and the rotor end plate 9. The cooling holes 21 are placed radially inward than the locations where the permanent magnets 6 are placed and at certain intervals in the circumferential direction. Also, the cooling holes 21 are placed in directions that are radially consistent with the locations where the permanent magnets 6 are placed. This enables it to cool the permanent magnets 6 more efficiently.

The rotary electric machine as described in the present example has the stator 4 and the rotor 1, the rotor 1 including the following: the rotor core 2 which is made up of electromagnetic steel sheets laminated in an axial direction; the permanent magnets 6 which are axially inserted in the rotor core 2; the shaft 3 going through the radial center of the rotor core 2 and serving as the axis of rotation; the rotor end plate 7 formed of a non-magnetic material and the rotor end plate 8 formed of an iron material (steel) being installed in an axial direction onto one end of the rotor core 2; and the rotor end plate 9 formed of an iron material (steel) and the rotor end plate 10 formed of a non-magnetic material being installed in a radial direction onto the other end of the rotor core 2.

Then, in the rotary electric machine as described in the present example, the rotor end plate 7 is installed axially inward than the rotor end plate 8 with the rotor end plate 7 in contact with the permanent magnets 6 and the rotor end plate 10 is installed radially outward than the rotor end plate 9 with the rotor end plate 10 in contact with the permanent magnets 6.

As appreciated above, according to the present example, it is possible to suppress generation of iron loss because of leakage flux produced by the permanent magnets 6, improve functionality and workability, and reduce manufacturing cost with reduced use of expensive non-magnetic materials.

Note that the present invention is not limited to the example described hereinbefore and various modifications are included therein. For example, the foregoing example has been described specifically to explain the present invention to make it easy to understand and the invention is not necessarily limited to its embodiments including all components described herein.

### Reference Signs List

1... rotor, 2... rotor core, 3... shaft, 4... stator, 5... magnet insertion hole, 6... permanent magnet, 7... rotor end plate, 8... rotor end plate, 9... rotor end plate, 10... rotor end plate, 21... cooling hole, 22... step, 23... gap, 24... hole, 31... fixture part, 32... tightening part

## Claims

1. A rotary electric machine comprising a stator (4) and a rotor (1),
the rotor including a rotor core (2) which is made up of electromagnetic steel sheets laminated in an axial direction; permanent magnets (6) which are axially inserted in the rotor core (2); a shaft (3) going through a radial center of the rotor core (2) and serving as an axis of rotation; a first rotor end plate (7) formed of a non-magnetic material and a second rotor end plate (8) formed of an iron material being installed in an axial direction onto one end of the rotor core (2); and a third rotor end plate (9) formed of an iron material and a fourth rotor end plate (10) formed of a non-magnetic material being installed in a radial direction onto the other end of the rotor core (2),
**characterised in that**
the first rotor end plate (7) is installed axially inward with respect to the second rotor end plate (8) with the first rotor end plate (7) in contact with the permanent magnets (6) and the fourth rotor end plate (10) is installed radially outward with respect to the third rotor end plate (9) with the fourth rotor end plate (10) in contact with the permanent magnets (6)

2. The rotary electric machine according to claim 1, wherein a diameter of the second rotor end plate (8) is smaller than a diameter of the first rotor end plate (7).

3. The rotary electric machine according to claim 1,
wherein an axial thickness of the second rotor end plate (8) is thicker than an axial thickness of the first rotor end plate (7).

4. The rotary electric machine according to claim 1,
wherein cooling air to cool the rotor (1) is supplied from a side where the first rotor end plate (7) is installed.

5. The rotary electric machine according to claim 1,
wherein, in the rotor, there are formed cooling holes (5) going through the second rotor end plate (8), the first rotor end plate (7), the rotor core (2), and the third rotor end plate (9).

6. The rotary electric machine according to claim 1,
wherein, in the first rotor end plate (7), holes (5) are formed in positions corresponding to locations where the permanent magnets (6) are placed.

## Patentansprüche

1. Rotierende elektrische Maschine mit einem Stator (4) und einem Rotor (1),
wobei der Rotor aufweist: einen Rotorkern (2), der aus elektromagnetischen Stahlblechen besteht, die in einer axialen Richtung geschichtet sind; Permanentmagnete (6), die axial in den Rotorkern (2) eingesetzt sind; eine Welle (3), die durch eine radiale Mitte des Rotorkerns (2) verläuft und als eine Drehachse dient; eine erste Rotorendplatte (7), die aus einem nichtmagnetischen Material gebildet ist, und eine zweite Rotorendplatte (8), die aus einem Eisenmaterial gebildet ist, die in einer axialen Richtung an einem Ende des Rotorkerns (2) installiert sind; und eine dritte Rotorendplatte (9), die aus einem Eisenmaterial gebildet ist, und eine vierte Rotorendplatte (10), die aus einem nichtmagnetischen Material gebildet ist, die in einer radialen Richtung an dem anderen Ende des Rotorkerns (2) installiert sind,
**dadurch gekennzeichnet, dass**
die erste Rotorendplatte (7) in Bezug auf die zweite Rotorendplatte (8) axial nach innen installiert ist, wobei die erste Rotorendplatte (7) mit den Permanentmagneten (6) in Kontakt ist, und die vierte Rotorendplatte (10) in Bezug auf die dritte Rotorendplatte (9) radial nach außen installiert ist, wobei die vierte Rotorendplatte (10) mit den Permanentmagneten (6) in Kontakt ist.

2. Rotierende elektrische Maschine nach Anspruch 1,
wobei ein Durchmesser der zweiten Rotorendplatte (8) kleiner als ein Durchmesser der ersten Rotorendplatte (7) ist.

3. Rotierende elektrische Maschine nach Anspruch 1,
wobei eine axiale Dicke der zweiten Rotorendplatte (8) dicker als eine axiale Dicke der ersten Rotorendplatte (7) ist.

4. Rotierende elektrische Maschine nach Anspruch 1,
wobei Kühlluft zum Kühlen des Rotors (1) von einer Seite zugeführt wird, an der die erste Rotorendplatte (7) installiert ist.

5. Rotierende elektrische Maschine nach Anspruch 1,
wobei in dem Rotor Kühllöcher (5) ausgebildet sind, die durch die zweite Rotorendplatte (8), die erste Rotorendplatte (7), den Rotorkern (2) und die dritte Rotorendplatte (9) verlaufen.

6. Rotierende elektrische Maschine nach Anspruch 1,
wobei in der ersten Rotorendplatte (7) Löcher (5) an Positionen ausgebildet sind, die Orten entsprechen, an denen die Permanentmagnete (6) angeordnet sind.

## Revendications

1. Machine électrique tournante comprenant un stator (4) et un rotor (1),
le rotor comprenant un noyau de rotor (2) qui est constitué de tôles d'acier électromagnétiques stratifiées dans une direction axiale ; des aimants permanents (6) qui sont insérés axialement dans le noyau de rotor (2) ; un arbre (3) traversant un centre radial du noyau de rotor (2) et servant d'axe de rotation ; une première plaque d'extrémité de rotor (7) formée d'un matériau non magnétique et une deuxième plaque d'extrémité de rotor (8) formée d'un matériau de fer étant installées dans une direction axiale sur une extrémité du noyau de rotor (2) ; et une troisième plaque d'extrémité de rotor (9) formée d'un matériau de fer et une quatrième plaque d'extrémité de rotor (10) formée d'un matériau non magnétique étant installées dans une direction radiale sur l'autre extrémité du noyau de rotor (2),
**caractérisée en ce que**
la première plaque d'extrémité de rotor (7) est installée axialement vers l'intérieur par rapport à la deuxième plaque d'extrémité de rotor (8) avec la première plaque d'extrémité de rotor (7) en contact avec les aimants permanents (6), et la quatrième plaque d'extrémité de rotor (10) est installée radialement vers l'extérieur par rapport à la troisième plaque d'extrémité de rotor (9) avec la quatrième plaque d'extrémité de rotor (10) en contact avec les aimants permanents (6).

2. Machine électrique tournante selon la revendication 1,
dans laquelle un diamètre de la deuxième plaque d'extrémité de rotor (8) est inférieur à un diamètre de la première plaque d'extrémité de rotor (7).

3. Machine électrique tournante selon la revendication 1,
dans laquelle une épaisseur axiale de la deuxième plaque d'extrémité de rotor (8) est supérieure à une épaisseur axiale de la première plaque d'extrémité de rotor (7).

4. Machine électrique tournante selon la revendication 1,
dans laquelle de l'air de refroidissement pour refroidir le rotor (1) est fourni à partir d'un côté où la première plaque d'extrémité de rotor (7) est installée.

5. Machine électrique tournante selon la revendication 1,
dans laquelle, dans le rotor, sont formés des trous de refroidissement (5) traversant la deuxième plaque d'extrémité de rotor (8), la première plaque d'extrémité de rotor (7), le noyau de rotor (2) et la troisième plaque d'extrémité de rotor (9) .

6. Machine électrique tournante selon la revendication 1,
dans laquelle, dans la première plaque d'extrémité de rotor (7), des trous (5) sont formés dans des positions correspondant à des emplacements où les aimants permanents (6) sont placés.
